# EUROPÄISCHE PATENTSCHRIFT

(11) **EP 0 937 616 B1**
(45) Veröffentlichungstag und Bekanntmachung des Hinweises auf die Patenterteilung: **11.12.2002**
(21) Anmeldenummer: 99103442.2
(22) Anmeldetag: 23.02.1999
(51) Int. Cl.: B60T 8/40, B60T 13/66

(54) **Hydraulische Fremdkraft-Bremsanlage**
Power assisted hydraulic brake system
Système hydraulique de freinage assisté par une force extérieure

(30) Priorität: 24.02.1998 DE 19807450
(43) Veröffentlichungstag der Anmeldung: 25.08.1999
(73) Patentinhaber: FTE automotive GmbH, 96106 Ebern (DE)
(72) Erfinder: Heubner, Wilhelm Dipl.-Ing. (FH), 96274 Itzgrund-Kaltenbrunn (DE); Marks, Paul Dipl.-Ing., 96106 Ebern-Fischbach (DE); Marx, Franc Dipl.-Ing. (FH), 95236 Kulmbach (DE); Oberlack, Norbert Dipl.-Ing., 91315 Höchstadt (DE); Schneider, Marcus Dipl.-Ing. (FH), 96106 Frickendorf (DE); Weber, Marcus Dipl.-Ing. (FH), 97531 Untertheres (DE); Zsari, Geza Dipl.-Ing., 96106 Ebern (DE)
(74) Vertreter: Oppermann, Mark, Dipl.-Ing.

(56) Entgegenhaltungen:
- WO-A-93/00236
- WO-A-93/09011
- DE-A- 3 502 018
- US-A- 4 938 541

## Beschreibung

Die Erfindung bezieht sich auf eine hydraulische Fremdkraft-Bremsanlage gemäß dem Oberbegriff des Patentanspruchs 1. Insbesondere bezieht sich die Erfindung auf eine hydraulische Fremdkraft-Bremsanlage für Kraftfahrzeuge, mittels der bei Ausfall der Fremdkraftunterstützung eine definierte Restbremskraft an einem Zuspannorgan aufgebracht werden kann.

Solche Bremsanlagen sind beispielsweise aus der DE-A-195 33 482 oder der DE-A-196 18 489 der Anmelderin bekannt. Die hydraulische Bremsanlage gemäß der DE-A-195 33 482 hat eine Ventilanordnung, die ein Drosselventil aufweist, dessen Ventilkörper einen im fremdkraftunterstützten Bremsbetrieb mit einem Druckmittel zwangsdurchströmten Drosselspalt ansteuerbar begrenzt, um einen definierten, einem Zuspannorgan anlegbaren Staudruck in einer Druckkammer einzustellen, in der ein Ventiikolben mit einer Durchgangsbohrung aufgenommen ist. Bei Ausfall der Fremdkraftunterstützung ist der Ventilkolben zur Erzeugung eines Restbremsdrucks in der Druckkammer über den Ventilkörper unter Verschluß der Durchgangsbohrung verschiebbar. Mit dem an der Durchgangsbohrung ausgebildeten Drosselspalt stellt dieser Stand der Technik eine sehr kompakte Ventilanordnung bereit, bei der der Ventilkörper nicht nur den Drosselspalt begrenzt, sondern auch als dichtendes Verschlußelement für die Durchgangsbohrung und der direkten Ansteuerung des Ventilkolbens dient, während der Bremsdruck in der Druckkammer jederzeit unmittelbar am Ventilkörper ansteht und somit gut an das Bremspedal zurückgemeldet werden kann.

Die DE-A-196 18 489 offenbart eine hydraulische Bremsanlage mit einem manuell betätigbaren Geberzylinder, der zwei Druckkammern aufweist. Die erste Druckkammer dient der hydraulischen Ansteuerung eines in einem Servokraft-Bremsbetrieb vom Druckmittel zwangsdurchströmten Drosselventils, um dessen Drosselquerschnitt zur Erzeugung eines definierten Staudrucks einzustellen, welcher einer mit dem Drosselventil verbundenen ersten Kolben-Zylinder-Anordnung eines Zuspannorgans zur Aufbringung einer Bremskraft anliegt. Die zweite Druckkammer ist zumindest bei ausgefallener Servokraft mit einer zweiten Kolben-Zylinder-Anordnung des Zuspannorgans verbunden, so daß auch dann eine Bremskraft aufgebracht werden kann. Als Alternative zur zweiten Kolben-Zylinder-Anordnung im Zuspannorgan kann eine separate Trennkolben-Zylinder-Anordnung vorgesehen werden, die zwischen die zweite Druckkammer des Geberzylinders und die einzelne Kolben-Zylinder-Anordnung des Zuspannorgans geschaltet wird. Im Ergebnis wird sowohl im Servokraft-Bremsbetrieb als auch bei Ausfall der Servokraft eine ausreichende Bremskraft aufgebracht und eine angemessene Rückmeldung der Bremskräfte an den Geberzylinder bewirkt, so daß auch bei diesem Stand der Technik am Bremspedal stets ein gutes Betätigungsgefühl gegeben ist.

Nun wird für manche Anwendungsfälle jedoch eine weitere Entkopplung des manuell betätigbaren Bremskreises vom Fremdkraft-Bremskreis gewünscht, so zum Beispiel, wenn im ABS- oder ASR-Betrieb der Bremsanlage eine direkte Rückmeldung des mittels des Fremdkraft-Bremskreises erzeugten, am Zuspannorgan anstehenden Bremsdrucks an das Bremspedal vermieden werden soll, um Fehlreaktionen des Fahrers infolge von am Bremspedal spürbaren Druckstößen zu verhindern.

In diesem Zusammenhang ist aus der DE-A-196 16 538 eine elektrohydraulische Bremsanlage für Kraftfahrzeuge bekannt geworden, die zur Notbetätigung einen sogenannten "Push-Through" Bremskreis aufweist, der von einem über ein Bremspedal betätigbaren Bremszylinder gespeist wird. Das Bremspedal weist einen Sensor zur Erfassung des Fahrerwunsches auf, der beispielsweise ein aus der Betätigung abgeleitetes elektrisches Weg- und/oder Kraftsignal abgibt. Der Fahrerwunsch wird zu einer elektronischen Steuereinheit übertragen, dort ausgewertet und zur Erzeugung elektrischer Steuersignale zur Ansteuerung von Ventilen und einer Hydraulikpumpe herangezogen. Zwischen dem "Push-Through" Bremskreis und den Radbremsen einer Fahrzeugachse sind elektromagnetisch betätigbare Umschaltventile angeordnet, um die Radbremsen entweder durch den "Push-Through" Bremskreis oder durch elektrisch gesteuerte Bremskanäle mit Bremsflüssigkeit zu beaufschlagen. Die federvorgespannten Umschaltventile verbinden im elektrisch unbetätigten Zustand den "Push-Through" Bremskreis mit den Radbremsen, wobei die Verbindung zu den elektrisch gesteuerten Bremskanälen gesperrt wird. Bei elektrischer Betätigung verbinden die Umschaltventile die Radbremsen jeweils mit den zugehörigen elektrisch gesteuerten Bremskanälen, wobei jeweils die Verbindung zu dem "Push-Through" Bremskreis gesperrt wird. Um die Sicherheit zu erhöhen, beispielsweise im Fall einer defekten Ventilrückstellfeder, werden die Umschaltventile jeweils auch über Drucksteuerleitungen zum "Push-Through" Bremskreis in die der "Push-Through" Betätigung entsprechende Vorzugsstellung gebracht. Weiterhin sind in den elektrisch gesteuerten Bremskanälen den Umschaltventilen jeweils Trennzylinder vorgeschaltet, durch die eine hydraulische Entkopplung zwischen dem "Push-Through" Bremskreis und den elektrisch gesteuerten Bremskanälen sichergestellt wird. Die Bremsdruckmodulation in den elektrisch gesteuerten Bremskanälen erfolgt über zusätzliche 3/3 Wegeventile, wobei der Bremsdruck von einer Einheit bereitgestellt wird, die aus der elektromotorisch betriebenen Hydraulikpumpe und einem Druckspeicher besteht, deren Verbindung wahlweise über ein Absperrventil hergestellt oder unterbunden wird.

Zwar ist bei dieser Bremsanlage im Fremdkraft-Bremsbetrieb ein gutes Betätigungsgefühl am Bremspedal gegeben, jedoch ist hierzu ein hoher baulicher bzw. regelungstechnischer Aufwand notwendig.

Der Vollständigkeit halber sei in diesem Zusammenhang noch erwähnt, daß im Stand der Technik bei bloß hilfskraft-unterstützten Bremsanlagen vorrichtungstechnisch aufwendige Kombinationsventile vorgeschlagen worden sind (vergl. beispielsweise die DE-A-38 32 538), die mittels einer komplexen Verschaltung einer Mehrzahl von Einzelventilen im ABS-Betrieb eine Trennung der Radbremsen vom Hauptzylinder gewährleisten sollen. Derartige hilfskraft-unterstützte Bremsanlagen sind schon aufgrund ihrer anderen Funktionsweise und ihres grundsätzlich verschiedenen Aufbaus, der beispielsweise eine ASR-Regelung nicht gestattet, nicht mit einer Fremdkraft-Bremsanlage wie hier beschrieben vergleichbar.

Schließlich offenbart die gattungsbildende WO-A-93 00236 eine hydraulische Fremdkraft-Bremsanlage für Kraftfahrzeuge, die ein 3/2 Wegeventil aufweist, das in seiner Grundstellung einen manuell betätigbaren Geberzylinder mit einem Radbremszylinder hydraulisch verbindet, so daß bei Ausfall der Fremdkraft über den Radbremszylinder eine Bremskraft aufgebracht werden kann. In der Betätigungsstellung des 3/2 Wegeventils verbindet es den Radbremszylinder mit einem in Abhängigkeit von der Betätigung des Geberzylinders ansteuerbaren Servokreis. Der Servokreis hat eine Hydraulikpumpe und ein im Fremdkraft-Bremsbetrieb vom Druckmittel zwangsdurchströmtes Drosselventil, dessen Drosselquerschnitt zur Erzeugung eines definierten Staudrucks eingestellt werden kann, welcher über das 3/2 Wegeventil dem Radbremszylinder zur Aufbringung einer Bremskraft angelegt werden kann.

Bei diesem Stand der Technik ist der Ausgang der Hydraulikpumpe direkt bzw. unmittelbar sowohl mit dem einstellbaren Drosselventil als auch mit einem Steueranschluß des 3/2 Wegeventils hydraulisch verbunden. Dies hat zur Folge, daß, wenn der über den Servokreis an den Radbremszylinder angelegte Bremsdruck etwa bei einer Antiblockierregelung unter ein bestimmtes Druckniveau abgesenkt werden soll, die Gefahr besteht, daß das federvorgespannte 3/2 Wegeventil aus seiner Betätigungsstellung in seine Grundstellung zurückkehrt und dabei den Servokreis in ungewollter Weise vom Radbremszylinder trennt. Im Ergebnis ist es nicht möglich, den Bremsdruck fein zu dosieren, was die Möglichkeit eines Bremsdruckabbaus bis auf Null voraussetzt.

Gegenüber dem oben geschilderten Stand der Technik liegt der Erfindung die Aufgabe zugrunde, eine einfach aufgebaute Fremdkraft-Bremsaniage zu schaffen, mittels der stets eine ausreichende Bremskraft am Zuspannorgan aufgebracht werden kann, die im Fremdkraft-Bremsbetrieb fein dosierbar ist, ohne daß sie direkt auf das Bremspedal zurückwirkt.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 10.

Bei einer hydraulischen Fremdkraft-Bremsanlage, insbesondere für Kraftfahrzeuge, die ein Umschaltventil hat,
das in seiner Grundstellung einen manuell betätigbaren Geberzylinder mit einem Zuspannorgan hydraulisch verbindet, so daß bei Ausfall der Fremdkraft am Zuspannorgan eine Bremskraft aufbringbar ist, und
das in seiner Betätigungsstellung, in der es sich im normalen Bremsbetrieb befindet, das Zuspannorgan zur Aufbringung einer Bremskraft mit einem in Abhängigkeit von der Betätigung des Geberzylinders elektrisch ansteuerbaren Servokreis wirkverbindet, der eine Hydraulikpumpe und ein im Fremdkraft-Bremsbetrieb von Hydraulikflüssigkeit zwangsdurchströmtes Drosselventil aufweist, dessen Drosselquerschnitt zur Erzeugung eines definierten Staudrucks einstellbar ist, welcher über das Umschaltventil dem Zuspannorgan anlegbar ist,
sind erfindungsgemäß die Hydraulikpumpe, ein Steuerzylinder für das Umschaltventil und das Drosselventil in dieser Reihenfolge in Strömungsrichtung der Hydraulikflüssigkeit im Servokreis hintereinander angeordnet, wobei der Steuerzylinder dazu angepaßt ist, infolge eines Fördervolumenstroms der Hydraulikpumpe das Umschaltventil von seiner Grundstellung in seine Betätigungsstellung zu schalten und unabhängig von dem mittels des Drosselventils jeweils eingestellten Staudruck in seiner Betätigungsstellung zu halten.

Im Ergebnis kann die hydraulische Fremdkraft-Bremsanlage insbesondere im Hinblick auf das Umschaltventil einfach aufgebaut werden, wobei keine aufwendigen bzw. störanfälligen Steuerelemente notwendig sind, wie etwa eine elektromagnetische Betätigungseinrichtung am Umschaltventil, die von einer eigenen Regelelektronik elektrisch angesteuert werden müßte. Darüber hinaus wird auf vorteilhafte Weise gewährleistet, daß das Umschaltventil nur dann in seine Betätigungsstellung schaltet, wenn im Servokreis die Hydraulikpumpe tatsächlich Druckmittel fördert, so daß zum einen dem Fahrer bei Druckaufbau im Servokreis die Fremdkraft quasi automatisch zur Verfügung steht. Zum anderen werden unter dem Gesichtspunkt erhöhter Sicherheit auf einfache Weise gefährliche Betriebssituationen vermieden, die im eingangs geschilderten Stand der Technik dann auftreten können, wenn die Regelelektronik das Umschaltventil fälschlicherweise in seine Betätigungsstellung schaltet, tatsächlich im Servokreis die Hydraulikpumpe aber nicht arbeitet. Darüber hinaus verbleibt das Umschaltventil aufgrund des Steuerzylinders auch in seiner Betätigungsstellung solange die Hydraulikpumpe Druckmittel fördert, so daß der an das Zuspannorgan angelegte Bremsdruck fein dosierbar und insbesondere bis auf Null abbaubar ist. Schließlich ist bei der erfindungsgemäßen Bremsanlage stets ein gutes Betätigungsgefühl am manuell zu betätigenden Geberzylinder gegeben, weil die am Geberzylinder aufgebrachten Betätigungsgrößen, wie Kräfte bzw. Wege, zur Bremsdruckeinstellung im Servokreis verwendet werden und im mittels des Umschaltventils abgeriegelten Kreisabschnitt zwischen Geberzylinder und Umschaltventil ein am betätigten Geberzylinder spürbarer Gegendruck erzeugt wird, während im Fremdkraft-Bremsbetrieb eine unerwünschte Rückmeldung von beispielsweise Druckstößen aufgrund einer ABS-Regelung an den betätigten Geberzylinder infolge der Trennung des Servokreises von dem Kreisabschnitt zwischen Geberzylinder und Umschaltventil unterbleibt.

Die Ausgestaltung des Servokreises mit in Reihe geschalteter Hydraulikpumpe, Steuerzylinder und Drosselventil hat ferner den Vorteil großer räumlicher Flexibilität, d.h. die einzelnen Bauelemente bzw. -gruppen, wie die Hydraulikpumpe, das Umschaltventil mit Steuerzylinder oder das Drosselventil, sind nicht an eine bestimmte Position im Kraftfahrzeug, z.B. am Bremspedal, gebunden, sondern können auch an einer anderen Stelle im Kraftfahrzeug angeordnet werden, wobei die einzelnen Bauelemente bzw. -gruppen im Vergleich zu beispielsweise herkömmlichen Unterdruck-Bremskraftverstärkern wenig Bauraum beanspruchen. Auch sinkt der vorrichtungstechnische Aufwand im Vergleich zu herkömmlichen Bremsanlagen insgesamt, weil infolge der funktionalen Trennung der Bauelemente bzw. -gruppen diese zur Erfüllung nur weniger Funktionen einfacher ausgebildet werden können.

Der Patentanspruch 2 gibt eine bevorzugte Ausgestaltung des Umschaltventils an, gemäß der das Umschaltventil als einfaches Wechselventil mit einem ungesteuerten Anschluß, der hydraulisch mit dem Zuspannorgan verbunden ist, und zwei Steueranschlüssen ausgebildet ist, von denen der eine Steueranschluß mit dem Geberzylinder und der andere Steueranschluß mit dem Servokreis hydraulisch verbunden ist.

Gemäß dem Patentanspruch 3 ist jedem Steueranschluß des Umschaltventils vorzugsweise ein Ventilsitz für einen Ventilkörper zugeordnet, der mittels einer Ventilfeder gegen den Ventilsitz am Steueranschluß zum Servokreis vorgespannt ist, so daß bei Ausfall der Fremdkraft stets für eine hydraulische Verbindung zwischen Geberzylinder und Zuspannorgan gesorgt ist.

Nach der Lehre des Patentanspruchs 4 weist der Steuerzylinder für das Umschaltventil vorzugsweise einen Steuerkolben auf, der zwei Druckräume begrenzt, von denen der eine Druckraum mit der Hydraulikpumpe und der andere Druckraum mit dem Drosselventil hydraulisch verbunden ist.

Gemäß dem Patentanspruch 5 können die Druckräume des Steuerzylinders über eine Festdrossel im Steuerkolben oder ein in Richtung der Hydraulikpumpe sperrendes Rückschlagventil hydraulisch verbunden sein.

In einer bevorzugten Ausgestaltung der Erfindung gemäß dem Patentanspruch 6 ist der Steuerkolben mittels eines Stößels, der im mit dem Drosselventil verbundenen Druckraum angeordnet ist, über den Steueranschluß zum Servokreis mit dem Ventilkörper des Umschaltventils auf vorteilhaft einfache Weise wirkverbunden, um bei Betrieb der Hydraulikpumpe den Ventilkörper gegen den Ventilsitz am Steueranschluß zum Geberzylinder zu drücken.

Wenn gemäß dem Patentanspruch 7 der Außendurchmesser des Stößels kleiner ist als der Innendurchmesser des Ventilsitzes am Steueranschluß zum Servokreis, kann der Stößel im Fremdkraft-Bremsbetrieb den Ventilsitz am Steueranschluß zum Servokreis leicht durchgreifen ohne die hydraulische Verbindung zwischen dem Servokreis und dem Zuspannorgan zu unterbrechen.

Der Patentanspruch 8 sieht in einer vorteilhaften Ausgestaltung der Erfindung vor, daß die dem mit der Hydraulikpumpe verbundenen Druckraum zugewandte hydraulische Wirkfläche des Steuerkolbens um ein Mehrfaches größer ist als die dem Steueranschluß zum Geberzylinder zugewandte hydraulische Wirkfläche des Ventilkörpers.

Gemäß dem Patentanspruch 9 ist der Druck im Servokreis vorzugsweise in Abhängigkeit von Signalen eines Drucksensors, der in eine Druckleitung zwischen dem Geberzylinder und dem Umschaltventil geschaltet ist, und einer Weg- oder Kraftmeßeinrichtung am Geberzylinder einstellbar. Durch diese Ausgestaltung ist in der hydraulischen Fremdkraft-Bremsanlage in vorteilhafter Weise eine Redundanz vorhanden, wodurch ein Kreisausfall sofort bemerkt bzw. angezeigt werden kann. Darüber hinaus kann somit im Fremdkraft-Bremsbetrieb ein hervorragendes Ansprechverhalten der Bremsanlage gewährleistet werden.

In einer vorteilhaften Weiterbildung der Erfindung nach dem Patentanspruch 10 ist das Drosselventil in Abhängigkeit von den Signalen des Drucksensors und der Weg- oder Kraftmeßeinrichtung elektromagnetisch ansteuerbar. Bei elektromagnetischer Ansteuerung des Drosselventil kann mit entsprechender Regelelektronik leicht eine ABS-, ASR- und/oder Fahrdynamikregelung realisiert werden, ohne das die Bremsanlage um weitere Komponenten erweitert werden müßte. Dabei können in vorteilhafter Weise konventionelle Geberzylinder mit Druckausgleichsbohrungen anstelle der sonst bei ABS- bzw. ASR-regelungsfähigen Bremsanlagen üblichen Geberzylinder mit teurem Zentralventil verwendet werden, weil der Geberzylinder von dem den Bremsdruck erzeugenden Servokreis über das Umschaltventil hydraulisch getrennt ist und somit der Bremsdruck nicht über den Geberzylinder abgebaut werden muß.

Die Erfindung wird nachstehend anhand eines bevorzugten Ausführungsbeispiels unter Bezugnahme auf die Zeichnung näher erläutert, wobei gleiche oder ähnliche Teile mit gleichen Bezugszeichen versehen sind. Dabei zeigen:
Die Fig. 1 ein Schaltbild einer erfindungsgemäßen Fremdkraft-Bremsanlage für ein Kraftfahrzeug, die zwei Vorderradund zwei Hinterradbremskreise aufweist, und
die Fig. 2 das Schaltbild des rechten Vorderradbremskreises entsprechend der strichpunktierten Linie in Fig. 1 in einer vergrößerten Darstellung.

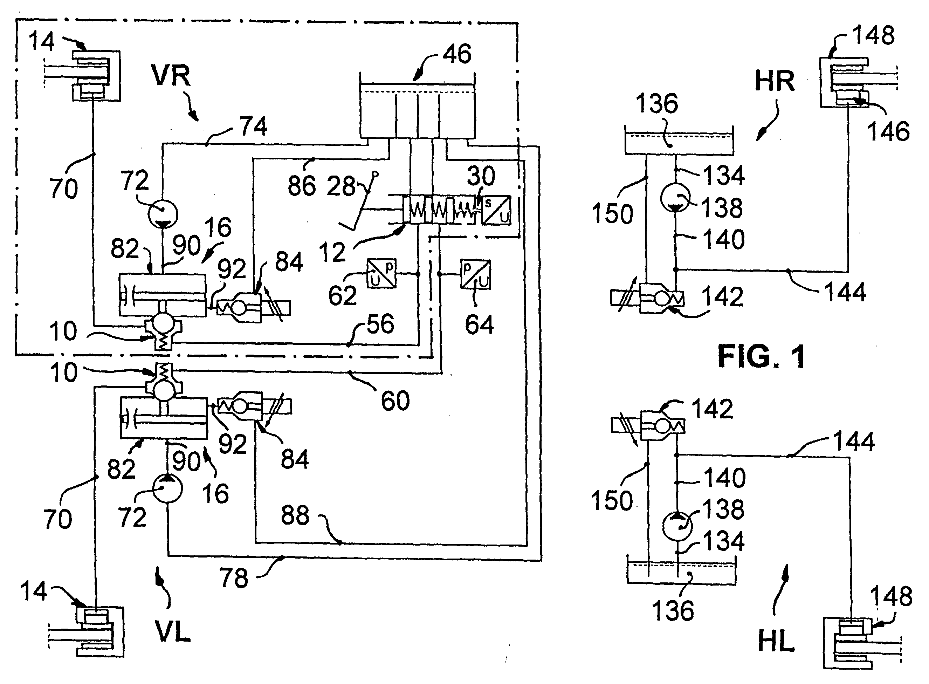

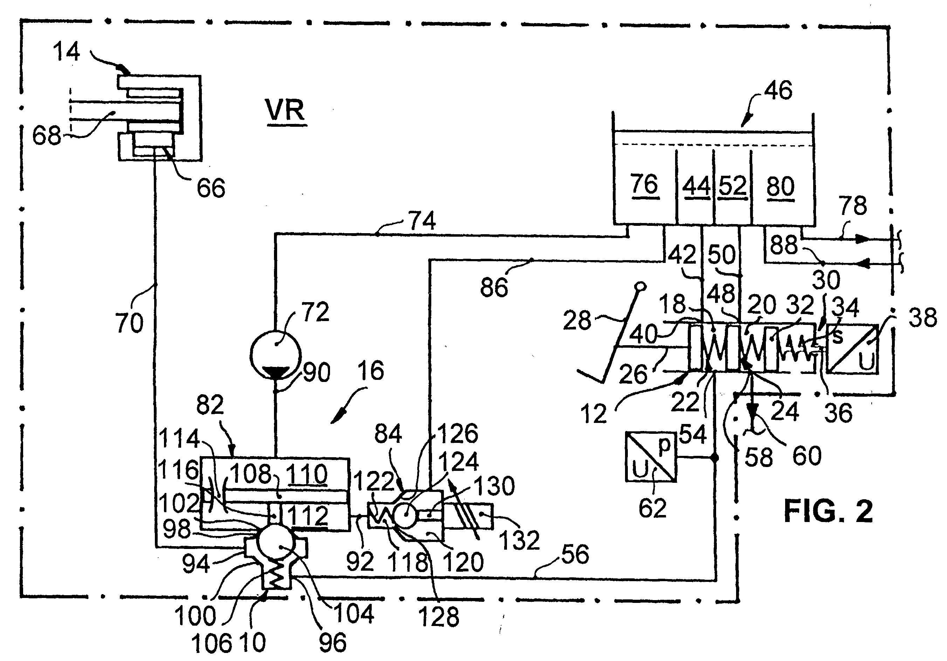

Gemäß den Fig. 1 und 2 hat eine Fremdkraft-Bremsanlage für ein vierrädriges Kraftfahrzeug zwei Vorderradbremskreise VR, VL für das rechte bzw. linke Vorderrad (nicht dargestellt) und zwei Hinterradbremskreise HR, HL für das rechte bzw. linke Hinterrad (nicht dargestellt). Der Vorderradbremskreis VR weist ein Umschaltventil 10 auf, das in seiner in den Fig. 1 und 2 gezeigten Grundstellung einen manuell betätigbaren Geberzylinder 12 mit einem Zuspannorgan in Form eines herkömmlichen Bremssattels 14 hydraulisch verbindet, so daß bei Ausfall der Fremdkraft am Bremssattel 14 eine Bremskraft aufgebracht werden kann. In seiner Betätigungsstellung stellt das Umschaltventil 10 eine hydraulische Verbindung zwischen dem Bremssattel 14 und einem in Abhängigkeit von der Betätigung des Geberzylinders 12 elektrisch ansteuerbaren Servokreis 16 mit einer Hydraulikpumpe 72 her, so daß im normalen, d.h. Fremdkraft-Bremsbetrieb über den Servokreis 16 am Bremssattel 14 eine Bremskraft aufgebracht werden kann. Das Umschaltventil 10 ist in Abhängigkeit vom Fördervolumenstrom der Hydraulikpumpe 72 im Servokreis 16 hydraulisch von seiner Grundstellung in seine Betätigungsstellung schaltbar, wie nachfolgend noch näher erläutert werden wird.

Die Fig. 2 zeigt den Vorderradbremskreis VR in einer vergrößerten Darstellung. Bei dem Geberzylinder 12 handelt es sich um einen Tandem-Hauptzylinder mit zwei Druckkammern 18, 20, von denen die in Fig. 2 linke Druckkammer 18 dem rechten Vorderradbremskreis VR zugeordnet ist, während die in Fig. 2 rechte Druckkammer 20 zu dem linken Vorderradbremskreis VL gehört. Ferner ist jedem Vorderradbremskreis VR, VL im Geberzylinder 12 ein Kolben-Feder-Paket 22, 24 zugeordnet, die miteinander in Reihe geschaltet sind und von denen das in Fig. 2 linke Kolben-Feder-Paket 22 über eine Kolbenstange 26 an eine Betätigungseinrichtung in Form eines Bremspedals 28 angelenkt ist.

An das in Fig. 2 rechte Kolben-Feder-Paket 24 schließt sich in Reihenschaltung eine Weg- oder Kraftmeßeinrichtung 30 als Signalgebereinheit zur Regelung des Bremsdrucks an, die im dargestellten Ausführungsbeispiel einen weiteren Kolben 32 und eine Druckfeder 34 aufweist. Der Kolben 32 ist über eine Stange 36 mit einem Weg- oder Kraftsensor 38 wirkverbunden, der der Abgabe eines dem Verschiebeweg bzw. der Verschiebekraft des Kolbens 32 proportionalen elektrischen Signals dient. Es ist ersichtlich, daß bei Betätigung des Geberzylinders 12 über das Bremspedal 28 die Kolben-Feder-Pakete 22, 24 gegen die Kraft der Druckfeder 34 verschoben werden müssen.

Der Druckkammer 18 ist eine Druckausgleichsbohrung 40 im Geberzylinder 12 zugeordnet, die über eine Ausgleichs- bzw. Nachlaufleitung 42 an ein Abteil 44 eines Ausgleichs- bzw. Vorratsbehälter 46 angeschlossen ist. Auch zu der Druckkammer 20 gehört eine Druckausgleichsbohrung 48 im Geberzylinder 12, die über eine Ausgleichs- bzw. Nachlaufleitung 50 mit einem weiteren Abteil 52 des Vorratsbehälters 46 hydraulisch verbunden ist. Weiterhin ist die Druckkammer 18 über eine Anschlußbohrung 54 des Geberzylinders 12 und eine Druckleitung 56 mit dem Umschaltventil 10 des rechten Vorderradbremskreises VR hydraulisch verbunden, während die Druckkammer 20 über eine Anschlußbohrung 58 des Geberzylinders 12 und eine Druckleitung 60 an das Umschaltventil 10 des linken Vorderradbremskreises VL angeschlossen ist, wie die Fig. 1 zeigt. Beide Druckleitungen 56, 60 sind schließlich mit jeweils einem Drucksensor 62, 64 versehen, der während eines Bremsvorgangs kontinuierlich den Druckverlauf in der jeweiligen Druckleitung 56, 60 erfaßt und ein dementsprechendes elektrisches Signal abgibt.

Der in Fig. 2 dargestellte Bremssattel 14 des rechten Vorderradbremskreises VR weist eine Kolben-Zylinder-Anordnung 66 auf, mittels der bei Druckbeaufschlagung auf an sich bekannte Weise eine Bremskraft an einer Bremsscheibe 68 aufgebracht werden kann und die über eine Druckleitung 70 mit dem Umschaltventil 10 verbunden ist. Obgleich im dargestellten Ausführungsbeispiel als Zuspannorgane Bremssättel 14 für Scheibenbremsen gezeigt sind, kann die Bremskraft selbstverständlich auch über Radzylinder für Trommelbremsen aufgebracht werden.

Gemäß Fig. 2 weist der Servokreis 16 des rechten Vorderradbremskreises VR die Hydraulikpumpe 72 auf, die über eine Ansaugleitung 74 mit einem weiteren Abteil 76 des Vorratsbehälters 46 hydraulisch verbunden ist. Auch der in Fig. 1 dargestellte Servokreis 16 des linken Vorderradbremskreises VL hat eine eigene Hydraulikpumpe 72, die mittels einer Ansaugleitung 78 an das vierte und letzte Abteil 80 des Vorratsbehälters 46 angeschlossen ist. Die Hydraulikpumpen 72 liefern vorzugsweise einen konstanten Volumenstrom und werden mittels Elektromotoren (nicht dargestellt) angetrieben oder sind über elektromagnetisch betätigbare Kupplungen (nicht dargestellt) mit drehenden Bauteilen der Verbrennungskraftmaschine des Kraftfahrzeugs wahlweise antriebsverbunden.

Wie in Fig. 2 weiterhin zu erkennen ist, weist der Servokreis 16 einen Steuerzylinder 82 für das Umschaltventil 10 sowie ein im Fremdkraft-Bremsbetrieb vom Druckmittel zwangsdurchströmtes Drosselventil 84 auf, dessen Drosselquerschnitt zur Erzeugung eines definierten Staudrucks einstellbar ist, wie noch näher beschrieben werden wird, und das über eine Rücklaufleitung 86 an das Abteil 76 des Vorratsbehälters 46 angeschlossen ist. In Fig. 2 deutlich zu erkennen ist die dezentrale Anordnung des Drosselventils 84, d.h. die von der Druckleitung 70 räumlich getrennte Anordnung des Drosselventils 84. Entsprechendes gilt für das Drosselventil 84 im Servokreis 16 des linken Vorderradbremskreises VL, welches über eine Rücklaufleitung 88 mit dem Abteil 80 des Vorratsbehälters 46 hydraulisch verbunden ist.

Die Hydraulikpumpe 72 ist mittels einer Druckleitung 90 an den Steuerzylinder 82 mit Förderrichtung zum Steuerzylinder 82 angeschlossen, während der Steuerzylinder 82 über eine Staudruckleitung 92 mit dem Drosselventil 84 hydraulisch verbunden ist, so daß die Hydraulikpumpe 72, der Steuerzylinder 82 und das Drosselventil 84 in dieser Reihenfolge in Strömungsrichtung der Hydraulikflüssigkeit im Servokreis 16 hintereinander angeordnet sind.

Das Umschaltventil 10 ist als Wechselventil ausgebildet, welches einen ungesteuerten Anschluß 94 hat, der über die Druckleitung 70 hydraulisch mit der Kolben-Zylinder-Anordnung 66 des Bremssattels 14 verbunden ist, und zwei Steueranschlüsse 96, 98 aufweist, von denen der eine Steueranschluß 96 über die Druckleitung 56 mit der Druckkammer 18 des Geberzylinders 12 und der andere Steueranschluß 98 mit dem Steuerzylinder 82 des Servokreises 16 hydraulisch verbunden ist.

Jedem der Steueranschlüsse 96, 98 ist ein ringförmiger Ventilsitz 100, 102 für einen im dargestellten Ausführungsbeispiel kugelförmigen Ventilkörper 104 zugeordnet, der mittels einer Ventilfeder 106 gegen den Ventilsitz 102 am Steueranschluß 98 zum Servokreis 16 vorgespannt ist, so daß in der Grundstellung des Umschaltventils 10 der Steueranschluß 98 zum Servokreis 16 vom Ventilkörper 104 verschlossen ist, während zwischen dem Steueranschluß 96 zum Geberzylinder 12 und dem angesteuerten Anschluß 94 eine hydraulische Verbindung besteht.

Der Steuerzylinder 82 für das Umschaltventil 10 weist einen längsverschieblichen, d.h. in der Fig. 2 nach oben bzw. unten bewegbaren Steuerkolben 108 auf, der den Steuerzylinder 82 in zwei Druckräume 110, 112 unterteilt bzw. diese begrenzt, von denen der eine Druckraum 110 über die Druckleitung 90 mit der Hydraulikpumpe 72 und der andere Druckraum 112 über die Staudruckleitung 92 mit dem Drosselventil 84 hydraulisch verbunden ist. Die beiden Druckräume 110, 112 sind über eine außermittig im Steuerkolben 108 ausgebildete Festdrossel 114 hydraulisch miteinander verbunden. Alternativ dazu können die beiden Druckräume 110, 112 über ein in Richtung des Druckraums 110, d.h. zur Hydraulikpumpe 72 sperrendes Rückschlagventil (nicht dargestellt) hydraulisch miteinander verbunden sein. Auch ist es möglich, anstelle des Steuerkolbens 108 eine die Druckräume 110, 112 trennende Membran (nicht dargestellt) vorzusehen, die entsprechende Drosselöffnungen bzw. -einsätze aufweist.

Die dem mit der Hydraulikpumpe 72 verbundenen Druckraum 110 zugewandte hydraulische Wirkfläche des Steuerkolbens 108 ist um ein Mehrfaches größer als die dem Ventilsitz 100 am Steueranschluß 96 zum Geberzylinder 12 zugewandte hydraulische Wirkfläche des Ventilkörpers 104, wie insbesondere der Fig. 2 zu entnehmen ist. Der Steuerkolben 108 ist ferner mittels eines Stößels 116 über den Steueranschluß 98 zum Servokreis 16 mit dem Ventilkörper 104 des Umschaltventils 10 mechanisch wirkverbunden, um bei Betrieb der Hydraulikpumpe 72 im Servokreis 16 den Ventilkörper 104 gegen die Kraft der Ventilfeder 106 auf den Ventilsitz 100 am Steueranschluß 96 zum Geberzylinder 12 zu drücken. Der Steuerkolben 108, der Stößel 116, der Ventilkörper 104 und die Ventilfeder 106 sind dabei in vorteilhaft einfacher Weise bezüglich einer gemeinsamen Achse koaxial hintereinander angeordnet. Der im mit dem Drosselventil 84 verbundenen Druckraum 112 angeordnete Stößel 116 ist vorzugsweise nur am Steuerkolben 108 befestigt, kann prinzipiell aber auch nur am Ventilkörper 104 befestigt sein. Der Außendurchmesser des Stößels 116 ist derart gewählt, daß er kleiner als der Innendurchmesser des Ventilsitzes 102 am Steueranschluß 98 zum Servokreis 16 ist, so daß der Stößel 116 im Fremdkraft-Bremsbetrieb, d.h. bei mittels des Stößels 116 auf den Ventilsitz 100 am Steueranschluß 96 zum Geberzylinder 12 geschobenen Ventilkörper 104 den Steueranschluß 98 zum Servokreis 16 durchgreifen kann ohne die hydraulische Verbindung zwischen dem Servokreis 16 und der Kolben-Zylinder-Anordnung 66 des Bremssattels 14 zu unterbrechen.

Gemäß Fig. 2 ist der Steuerzylinder 82 am Umschaltventil 10 befestigt und bildet mit diesem eine Baueinheit, bei der der Grundstellung des Umschaltventils 10 über den mittels der Ventilfeder 106 vorgespannten Ventilkörper 104 eine definierte Stellung der aus Steuerkolben 108 und Stößel 116 bestehenden Einheit im Steuerzylinder 82 zugeordnet ist.

Das Drosselventil 84 ist in Durchgangs-Nullstellung geschaltet und hat eine Druckkammer 118, die über die Staudruckleitung 92 an den Druckraum 112 des Steuerzylinders 82 angeschlossen ist, und eine Ablaufkammer 120, die über die Rücklaufleitung 86 mit dem Vorratsbehälter 46 hydraulisch verbunden ist. In der Druckkammer 118 ist eine Rückstellfeder 122 für einen in der Ablaufkammer 120 angeordneten kugelförmigen Ventilkörper 124 vorgesehen, der mit einem im Bereich der Ablaufkammer 120 angebrachten ringförmigen Dichtsitz 126 zur Ausbildung eines einstellbaren ringförmigen Drosselspalts 128 zusammenwirkt. Der Ventilkörper 124 wird mittels der Rückstellfeder 122 gegen einen von außen abgedichtet in die Ablaufkammer 120 hineinragenden Ventilbolzen 130 gedrückt, der mit einem elektromagnetischen Stellantrieb 132 wirkverbunden ist. Der Ventilbolzen 130 kann mittels des Stellantriebs 132 in axialer Richtung definiert verschoben werden, um entgegen der Kraft der Rückstellfeder 122 über den Ventilkörper 124 den Drosselspalt 128 einzustellen, wobei sich der Drosselspalt 128 bei zunehmender Strombeaufschlagung des Stellantriebs 132 verkleinert und bei Wegnahme des Stroms durch die Kraft der Rückstellfeder 122 und den im Fremdkraft-Bremsbetrieb in der Druckkammer 118 herrschenden Druck vergrößert, der auf den Ventilkörper 124 wirkt. Schließlich ist das Drosselventil 84 in Abhängigkeit von den Signalen des Drucksensors 62 und der Weg- oder Kraftmeßeinrichtung 30 elektromagnetisch ansteuerbar.

Der Vorderradbremskreis VL für das linke Vorderrad unterscheidet sich hinsichtlich seines Aufbaus von dem Vorderradbremskreis VR für das rechte Vorderrad lediglich dadurch, daß die vom Geberzylinder 12 zum Umschaltventil 10 führende Druckleitung 60 an die in Fig. 2 rechte Druckkammer 20 des Geberzylinders 12 angeschlossen ist und die Ansaugleitung 78 der Hydraulikpumpe 72 sowie die Rücklaufleitung 88 des Drosselventils 84 mit einem eigenen Abteil 80 des Ausgleichsbehälters 46 hydraulisch verbunden sind. Aufbau und Funktion des linken Vorderradbremskreises VR entsprechen ansonsten dem bzw. der des rechten Vorderradbremskreises VL und werden daher nicht näher beschrieben.

Gemäß Fig. 1 weist der Hinterradbremskreis HR für das rechte Hinterrad eine über eine Ansaugleitung 134 eingangsseitig an einen Vorratsbehälter 136 angeschlossene Hydraulikpumpe 138 mit vorzugsweise konstantem Fördervolumen auf, die wie die Hydraulikpumpen 72 der Vorderradbremskreise VR, VL von einem eigenen Elektromotor (nicht dargestellt) angetrieben wird oder über eine Kupplung mit drehenden Bauelementen der Verbrennungskraftmaschine des Kraftfahrzeugs antriebsverbunden werden kann. Ausgangsseitig ist die Hydraulikpumpe 138 mittels einer Druckleitung 140 an ein elektromagnetisch ansteuerbares Drosselventil 142 angeschlossen, welches hinsichtlich Aufbau und Funktion dem Drosselventil 84 der Vorderradbremskreise VR, VL entspricht und deshalb nicht näher beschrieben wird. Von der Druckleitung 140 zweigt eine weitere Druckleitung 144 ab, die entsprechend den Vorderradbremskreisen VR, VL mit einer Kolben-Zylinder-Anordnung 146 eines Zuspannorgans in Form eines Bremssattels 148 einer Scheibenbremse bzw. mit einem Radzylinder (nicht dargestellte Alternative) einer Trommelbremse hydraulisch verbunden ist, so daß der sich im Fremdkraft-Bremsbetrieb, d.h. bei aktivierter Hydraulikpumpe 138 im Drosselventil 142 einstellende Staudruck der Kolben-Zylinder-Anordnung 146 zur Aufbringung einer Bremskraft angelegt werden kann. Das Drosselventil 142 ist schließlich über eine Rücklaufleitung 150 mit dem Vorratsbehälter 136 hydraulisch verbunden, um den Kreis zu schließen.

Im Gegensatz zu den Vorderradbremskreisen VR, VL weist der Hinterradbremskreis HR keine hydraulische Verbindung zu dem Geberzylinder 12 auf, sondern wird allein elektrisch angesteuert, wie noch beschrieben werden wird. Dementsprechend ist eine Notbetätigung des Hinterradbremskreises HR bei Ausfall der Fremdkraftunterstützung nicht möglich, infolge der Bremskraftverteilung zwischen den Vorderradbremskreisen VR, VL und den Hinterradbremskreisen HR, HL, die üblicherweise etwa 70% zu 30% beträgt, aber auch nicht notwendig, weil die an den Vorderrädern bei Ausfall der Fremdkraftunterstützung aufbringbare Bremskraft den gesetzlichen Erfordernissen genügt. Hinzu kommt, daß ein Ausfall jeglicher Fremdkraftunterstützung relativ unwahrscheinlich ist, weil die vier Radbremskreise VR, VL, HR, HL der hydraulischen Fremdkraft-Bremsanlage mit eigenen Hydraulikpumpen 72, 138 jeweils autark ausgebildet sind.

Der Hinterradbremskreis HL für das linke Hinterrad entspricht hinsichtlich Aufbau und Funktion dem Hinterradbremskreis HR für das rechte Hinterrad und wird daher nicht näher beschrieben.

In den Figuren der Übersichtlichkeit halber nicht dargestellt ist eine Regelelektronik, die über elektrische Signalleitungen an die Weg- oder Kraftmeßeinrichtung 30 am Geberzylinder 12, die Drucksensoren 62, 64 in den Druckleitungen 56, 60, die Elektromotoren bzw. elektromagnetisch betätigbaren Kupplungen für die Hydraulikpumpen 72, 138, die Stellantriebe 132 der Drosselventile 84, 142 sowie an Winkelgeschwindigkeitssensoren (nicht dargestellt) an jedem Rad des Kraftfahrzeugs angeschlossen ist. Mittels der Regelelektronik wird u.a. im Fremdkraft-Bremsbetrieb der Druck in den Servokreisen 16 der Vorderradbremskreise VR, VL sowie in den Hinterradbremskreisen HR, HL in Abhängigkeit von den Signalen der Drucksensoren 62, 64 sowie der Weg- oder Kraftmeßeinrichtung 30 am Geberzylinder 12 eingestellt.

Im Folgenden wird die Funktionsweise der hydraulischen Fremdkraft-Bremsanlage näher beschrieben.

Im unbetätigten Zustand der hydraulischen Fremdkraft-Bremsanlage, d.h. in der Grundstellung der Radbremskreise VR, VL, HR, HL, werden die beiden Kolben-Feder-Pakete 22, 24 des Geberzylinders 12 über die Druckfeder 34 in Fig. 2 nach links auf Anschlag gehalten. Dabei ist die Kolben-Zylinder-Anordnung 66 des Bremssattels 14 über die Druckleitung 70, den Anschluß 94 des Umschaltventils 10, vorbei an dem mittels der Ventilfeder 106 gegen den Ventilsitz 102 am Steueranschluß 98 zum Servokreis 16 gedrückten Ventilkörper 104, durch den Steueranschluß 96 des Umschaltventils 10 hindurch, über die Druckleitung 56, die Anschlußbohrung 54 des Geberzylinders 12, die Druckkammer 18, die Druckausgleichsbohrung 40 und die Ausgleichsleitung 42 mit dem Abteil 44 des Vorratsbehälters 46 drucklos verbunden. Weiterhin hält der gegen den Ventilsitz 102 gedrückte Ventilkörper 104 des Umschaltventils 10 den Steuerkolben 108 des Steuerzylinders 82 über den Stößel 116 in einer vorbestimmten Position, während die Rückstellfeder 122 den Ventilkörper 124 des Drosselventils 84 vom Dichtsitz 126 mit maximal geöffnetem Drosselspalt 128 wegdrückt. Somit ist im Servokreis 16 das Abteil 76 des Vorratsbehälters 46 über die Ansaugleitung 74, die Hydraulikpumpe 72, die Druckleitung 90, den Druckraum 110 des Steuerzylinders 82, die Festdrossel 114 im Steuerkolben 108, den Druckraum 112, vorbei am geschlossenen Umschaltventil 10, über die Staudruckleitung 92, die Druckkammer 118 des Drosselventils 84, den geöffneten Drosselspalt 128, die Ablaufkammer 120 und die Rücklaufleitung 86 drucklos mit sich selbst verbunden. Dementsprechend ist auch im Hinterradbremskreis HR der Vorratsbehälter 136 über die Ansaugleitung 134, die Hydraulikpumpe 138, die Druckleitung 140, das maximal geöffnete Drosselventil 142 und die Rücklaufleitung 150 drucklos mit sich selbst verbunden.

Durch diese Grundstellung mit gegen den Ventilsitz 102 am Steueranschluß 98 zum Servokreis 16 gedrückten Ventilkörper 104 im Umschaltventil 10 wird die bei Ausfall der Fremdkraftunterstützung notwendige Restbremsfunktion der Bremsanlage gesichert. Dabei kann in den Vorderradbremskreisen VR, VL durch Niedertreten des Bremspedals 28 und dementsprechende Verschiebung der Kolben-Feder-Pakete 22, 24 im Geberzylinder 12 über die oben angesprochene hydraulische Verbindung zu den Kolben-Zylinder-Anordnungen 66 der Bremssättel 14 an den Bremsscheiben 68 eine Bremskraft wie in herkömmlichen Bremsanlagen ohne Fremd- bzw. Hilfskraftunterstützung aufgebracht werden.

Im Fremdkraft-Bremsbetrieb wird durch Niedertreten des Bremspedals 28 der Bremsvorgang eingeleitet. In der Folge verschieben sich die Kolben-Feder-Pakete 22, 24 und der Kolben 32 der Weg- oder Kraftmeßeinrichtung 30 gegen die Kraft der Druckfeder 34, wobei die mit dem Kolben 32 wirkverbundene Stange 36 mit vorbestimmter Kraft bzw. um einen vorbestimmten Weg relativ zum Weg- oder Kraftsensor 38 verfährt. Dabei wird auch in den Druckkammern 18, 20 des Geberzylinders 12 und somit in den Druckleitungen 56, 60 unter Kompression der Federn der Kolben-Feder-Pakete 22, 24 ein Druck aufgebaut, der von der Drucksensoren 62, 64 erfaßt wird. Etwa gleichzeitig mit Überfahren der Druckausgleichsbohrungen 40, 48 des Geberzylinders 12 durch die Kolben der Kolben-Feder-Pakete 22, 24 wird mittels der elektrischen Signale der Weg- oder Kraftmeßeinrichtung 30 und der Drucksensoren 62, 64 durch die Regelelektronik die Einleitung eines Bremsvorgangs erkannt, wobei die vorhandene Signalredundanz zur Sicherheit der Bremsanlage beiträgt. Durch entsprechende Ausbildung bzw. Vorspannung der Druckfeder 34 können die Signale der Weg- oder Kraftmeßeinrichtung 30 mit den Signalen der Drucksensoren 62, 64 synchronisiert werden.

Die Regelelektronik steuert nunmehr die Elektromotoren der Hydraulikpumpen 72 der Vorderradbremskreise VR, VL an bzw. stellt über die elektromagnetisch betätigbaren Kupplungen eine Antriebsverbindung für die Hydraulikpumpen 72 her, die über die Ansaugleitungen 74, 78 Hydraulikflüssigkeit aus dem Vorratsbehälter 46 ansaugen und diese im Fremdkraft-Bremsbetrieb auf einem Druckniveau fördern, das gleich oder größer dem für eine ausreichende Bremskraft am Bremssattel 14 maximal erforderlichen Servo- bzw. Bremsdruck ist. Die Hydraulikflüssigkeit wird nun über den oben beschriebenen Kreislauf im Servokreis 16 umgewälzt.

Ferner steuert die Regelelektronik die Stellantriebe 132 der Drosselventile 84 an, um die Drosselspalte 128 in Abhängigkeit von den Signalen der Weg- oder Kraftmeßeinrichtung 30 und den Drucksensoren 62, 64 einzustellen, so daß sich in der jeweiligen Druckkammer 118 der Drosselventile 84 ein zu dem Öffnungsquerschnitt des Drosselspalts 128 korrespondierender Staudruck aufbaut. Eine detailliertere Beschreibung der Funktion der Drosselventile 84 kann unterbleiben, weil sie beispielsweise aus der DE-A-195 33 482 oder der DE-A-196 18 489 der Anmelderin bekannt ist.

Im Ergebnis wird in jedem Vorderradbremskreis VR, VL aufgrund des Fördervolumenstroms der Hydraulikpumpe 72 die Festdrossel 114 am Steuerkolben 108 des Steuerzylinders 82 durchströmt und es stellt sich eine Druckdifferenz am Steuerkolben 108 ein, die eine in Fig. 2 nach unten gerichtete Kraft am Steuerkolben 108 zur Folge hat. Gleichzeitig bringt der in der Druckleitung 56 über den Geberzylinder 12 manuell aufgebrachte Druck unterstützt von der Kraft der Ventilfeder 106 des Umschaltventils 10 am Ventilkörper 104 eine in Richtung des Ventilsitzes 102 am Steueranschluß 98 zum Servokreis 16 wirkende Kraft auf, die über den Stößel 116 ebenfalls am Steuerkolben 108 wirkt.

Die sich am Steuerkolben 108 einstellende resultierende Kraft, welche konstruktiv im wesentlichen durch geeignete Wahl bzw. Abstimmung der hydraulischen Wirkflächen am Ventilkörper 104 des Umschaltventils 10 und am Steuerkolben 108 des Steuerzylinders 82 (Verhältnis der effektiven Wirkfläche am Steuerkolben 108 zu der am Ventilkörper 104 > 1), der Öffnungsquerschnitte der Festdrossel 114 im Steuerkolben 108 und der Federkraft der Ventilfeder 106 des Umschaltventils 10 beeinflußt werden kann, verschiebt den Steuerkolben 108 in den Druckraum 112 hinein. Dabei stößt der Stößel 116 den Ventilkörper 104 in direkter Kraftkopplung vom Ventilsitz 102 am Steueranschluß 98 zum Servokreis 16 und drückt den Ventilkörper 104 gegen den Ventilsitz 100 am Steueranschluß 96 zum Geberzylinder 12, so daß die hydraulische Verbindung zwischen Geberzylinder 12 und Bremssattel 14 unterbrochen wird, während der Servokreis 16 über den Druckraum 112 am Außenumfang des Stößels 116 vorbei, durch den Ventilsitz 102 am Steueranschluß 98 zum Servokreis 16 hindurch sowie über den Anschluß 94 und die Druckleitung 70 mit der Kolben-Zylinder-Anordnung 66 des Bremssattels 14 verbunden wird. Zeitlich gesehen wird das Umschaltventil 10 unmittelbar nach Aktivierung der Hydraulikpumpe 72 und somit bei im Servokreis 16 vorhandenem Fördervolumenstrom wie oben beschrieben von seiner Grundstellung in seine Betätigungsstellung geschaltet, in der es während eines fremdkraftunterstützten Bremsvorgangs stets verharrt.

Die an den Bremssätteln 14 der Vorderradbremskreise VR, VL auf die Bremsscheiben 68 wirkenden Bremskräfte werden nun mittels der Regelelektronik durch Ansteuerung der Drosselventile 84 zur Erzeugung eines jeweils vorbestimmten, fein dosierbaren Staudrucks (p ≥ 0 bar) eingestellt, d.h. erhöht oder verringert, wobei der Staudruck über die oben beschriebene hydraulische Verbindung zwischen dem jeweiligen Servokreis 16 und dem entsprechenden Bremssattel 14 der jeweiligen Kolben-Zylinder-Anordnung 66 anliegt. Entsprechend der konstruktiv vorgegebenen Bremsdruckverteilung bzw. einer Regelungsvorgabe durch die Regelelektronik wird die an dem Bremssattel 148 des rechten Hinterradbremskreises HR wirkende Bremskraft durch Ansteuerung des Drosselventils 142 zur Erzeugung eines definierten Staudrucks eingestellt, der über die Druckleitung 144 der Kolben-Zylinder-Anordnung 146 des Bremssattels 148 anliegt. Entsprechendes gilt für den linken Hinterradbremskreis HL. Die Funktion der Drosselventile 142 soll hier nicht näher beschrieben werden, da sie der der Drosselventile 84 entspricht.

Da im Fremdkraft-Bremsbetrieb die Regelelektronik die Drosselventile 84, 142 entsprechend der über die Weg- oder Kraftmeßeinrichtung 30 bzw. die Drucksensoren 62, 64 erfaßten Pedalvorgabe ansteuert und der Geberzylinder 12 mittels der Umschaltventile 10 von den Bremssätteln 14 hydraulisch getrennt ist, während in den abgeriegelten Druckleitungen 56, 60 ein Druckaufbau erfolgt, hat der Fahrer des Kraftfahrzeugs am Bremspedal 28 stets ein gutes Betätigungsgefühl.

Soll der Bremsvorgang beendet werden, wird das Bremspedal 28 entlastet, woraufhin die Kolben-Feder-Pakete 22, 24 des Geberzylinders 12 unter der Kraft der Druckfeder 34 der Weg- oder Kraftmeßeinrichtung 30 in ihre Ausgangsstellung zurückfahren. Unterschreiten die mittels der Weg- oder Kraftmeßeinrichtung 30 und der Drucksensoren 62, 64 erfaßten Werte vorbestimmte Werte für den Pedalweg bzw. die Pedalkraft und den Druck, erkennt die Regelelektronik, daß der Bremsvorgang beendet werden soll und unterbricht die Ansteuerung der Hydraulikpumpen 72, 138 sowie der Stellantriebe 132 der Drosselventile 84, 142. Im Ergebnis fährt im jeweiligen Drosselventil 84, 142 der Ventilkörper 124 unter der Kraft der Rückstellfeder 122 in seine oben beschriebene Ausgangsstellung zurück. Gleichzeitig wird im jeweiligen Umschaltventil 10 der Ventilkörper 104 unter der Kraft der Ventilfeder 106 gegen den Ventilsitz 102 am Steueranschluß 98 zum Servokreis 16 gedrückt, während der Steuerkolben 108 über den Stößel 116 in Richtung des Druckraums 110 verschoben wird. Somit werden die Umschaltventile 10 in ihre den Geberzylinder 12 mit den Bremssätteln 14 hydraulisch verbindende Grundstellung geschaltet.

Bei einer (optionalen) Antiblockierregelung (ABS) arbeitet die hydraulische Fremdkraft-Bremsanlage wie folgt.

Die Antiblockierregelung bewirkt prinzipiell, daß, wenn während eines Bremsvorgangs mit anstehendem Bremsdruck eine bestimmte Verzögerungsschwelle an einem gebremsten Rad überschritten wird, was mittels des vom Winkelgeschwindigkeitssensor abgegebenen Signals durch die Regelelektronik erkennbar ist, der Radbremsdruck soweit verringert wird, bis eine zweite Verzögerungsschwelle an diesem Rad unterschritten wird. Hierfür kann es notwendig sein, den anstehenden Radbremsdruck bis auf Null abzubauen. Danach wird der Radbremsdruck wieder erhöht, bis entweder das Rad erneut überbremst oder der vom Fahrer vorgegebene Bremsdruck erreicht ist.

Eine solche Regelung ist für jedes Rad getrennt durch entsprechende elektromagnetische Ansteuerung des Drosselventils 84 bzw. 142 über die Regelelektronik möglich, wodurch wie oben beschrieben der an dem jeweiligen Bremssattel 14 bzw. 148 angelegte Staudruck definiert eingestellt bzw. auf Null abgebaut werden kann, unabhängig von der Betätigung des Geberzylinders 12, der über die in Betätigungsstellung geschalteten Umschaltventile 10 von den Servokreisen 16 hydraulisch getrennt ist. Hierzu werden in vorteilhafter Weise keine weiteren Bauelemente benötigt.

Auch eine (optionale) Antriebsschlupfregelung (ASR) bzw. eine Fahrdynamikregelung kann mit der beschriebenen hydraulischen Fremdkraft-Bremsanlage ohne zusätzliche Bauelemente realisiert werden.

Eine Antriebsschlupfregelung bewirkt prinzipiell, daß, wenn beispielsweise beim Anfahren eines Kraftfahrzeugs die Reibbeiwerte eines angetriebenen Rads zum Untergrund zu gering sind, also eine Beschleunigungsschwelle überschritten wird, dieses Rad solange angebremst wird, bis eine zweite Beschleunigungsschwelle unterschritten wird, so daß sich das Rad wieder in einem zulässigen Schlupfbereich bewegt. Bei einer Fahrdynamikregelung hingegen, die prinzipiell auf die Erhaltung der Längsstabilität des Kraftfahrzeugs, meßbar über den Gierwinkel zwischen der Längsachse des Kraftfahrzeugs und der momentanen Fahrtrichtung, abstellt, werden in kritischen Fahrzuständen, wie beispielsweise Untersteuern, Übersteuern oder Bremsen während schneller Kurvenfahrt, die auftretenden Giermomente, die zu einem Ausbrechen oder Schleudern des Kraftfahrzeugs führen können, u.a. durch Anbremsen eines oder mehrerer Räder und beispielsweise einem gezielten Eingriff in das Motormanagement korrigiert. Bei beiden Regelungen muß das Bremspedal 28 nicht betätigt werden.

Für eine derartige Regelung ist somit die Modulation des Bremsdrucks an einzelnen Rädern erforderlich. Dies wird ebenfalls mit den vorstehend beschriebenen Drosselventilen 84 bzw. 142, von denen für jeden Bremskreis VR, VL, HR, HL jeweils eines vorgesehen ist, und die elektrische Aktivierung der Hydraulikpumpen 72, 138 mittels der Regelelektronik gewährleistet.

Obgleich im dargestellten Ausführungsbeispiel der hydraulischen Fremdkraft-Bremsanlage eine Restbremsfunktion an den Hinterradbremskreisen nicht vorgesehen ist, kann eine solche dadurch gewährleistet werden, daß die Hinterradbremskreise über geeignet plazierte, dem oben beschriebenen Umschaltventil zumindest funktionell entsprechende Umschaltventile hydraulisch mit den Vorderradbremskreisen verbunden werden. Auch ist die Erfindung nicht auf das beschriebene Prinzip der Druckerzeugung im Fremdkraft-Bremsbetrieb beschränkt, vielmehr kann der Druck fremdkraftunterstützt anders erzeugt werden. Beispielhaft genannt sei die Möglichkeit von regelbaren Hydraulikpumpen in den Servokreisen.

### Bezugszeichenliste

- 10: Umschaltventil
- 12: Geberzylinder
- 14: Bremssattel
- 16: Servokreis
- 18: Druckkammer
- 20: Druckkammer
- 22: Kolben-Feder-Paket
- 24: Kolben-Feder-Paket
- 26: Kolbenstange
- 28: Bremspedal
- 30: Weg- oder Kraftmeßeinrichtung
- 32: Kolben
- 34: Druckfeder
- 36: Stange
- 38: Weg- oder Kraftsensor
- 40: Druckausgleichsbohrung
- 42: Ausgleichsleitung
- 44: Abteil
- 46: Vorratsbehälter
- 48: Druckausgleichsbohrung
- 50: Ausgleichsleitung
- 52: Abteil
- 54: Anschlußbohrung
- 56: Druckleitung
- 58: Anschlußbohrung
- 60: Druckleitung
- 62: Drucksensor
- 64: Drucksensor
- 66: Kolben-Zylinder-Anordnung
- 68: Bremsscheibe
- 70: Druckleitung
- 72: Hydraulikpumpe
- 74: Ansaugleitung
- 76: Abteil
- 78: Ansaugleitung
- 80: Abteil
- 82: Steuerzylinder
- 84: Drosselventil
- 86: Rücklaufleitung
- 88: Rücklaufleitung
- 90: Druckleitung
- 92: Staudruckleitung
- 94: Anschluß
- 96: Steueranschluß
- 98: Steueranschluß
- 100: Ventilsitz
- 102: Ventilsitz
- 104: Ventilkörper
- 106: Ventilfeder
- 108: Steuerkolben
- 110: Druckraum
- 112: Druckraum
- 114: Festdrossel
- 116: Stößel
- 118: Druckkammer
- 120: Ablaufkammer
- 122: Rückstellfeder
- 124: Ventilkörper
- 126: Dichtsitz
- 130: Ventilbolzen
- 132: Stellantrieb
- 134: Ansaugleitung
- 136: Vorratsbehälter
- 138: Hydraulikpumpe
- 140: Druckleitung
- 142: Drosselventil
- 144: Druckleitung
- 146: Kolben-Zylinder-Anordnung
- 148: Bremssattel
- 150: Rücklaufleitung

- VR: rechter Vorderradbremskreis
- VL: linker Vorderradbremskreis
- HR: rechter Hinterradbremskreis
- HL: linker Hinterradbremskreis

## Patentansprüche

1. Hydraulische Fremdkraft-Bremsanlage, insbesondere für Kraftfahrzeuge, mit einem Umschaltventil (10),
das in seiner Grundstellung einen manuell betätigbaren Geberzylinder (12) mit einem Zuspannorgan (14) hydraulisch verbindet, so daß bei Ausfall der Fremdkraft am Zuspannorgan (14) eine Bremskraft aufbringbar ist, und
das in seiner Betätigungsstellung, in der es sich im normalen Bremsbetrieb befindet, das Zuspannorgan (14) zur Aufbringung einer Bremskraft mit einem in Abhängigkeit von der Betätigung des Geberzylinders (12) elektrisch ansteuerbaren Servokreis (16) wirkverbindet, der eine Hydraulikpumpe (72) und ein im Fremdkraft-Bremsbetrieb von Hydraulikflüssigkeit zwangsdurchströmtes Drosselventil (84) aufweist, dessen Drosselquerschnitt zur Erzeugung eines definierten Staudrucks einstellbar ist, welcher über das Umschaltventil (10) dem Zuspannorgan (14) anlegbar ist, **dadurch gekennzeichnet, daß** die Hydraulikpumpe (72), ein Steuerzylinder (82) für das Umschaltventil (10) und das Drosselventil (84) in dieser Reihenfolge in Strömungsrichtung der Hydraulikflüssigkeit im Servokreis (16) hintereinander angeordnet sind, wobei der Steuerzylinder (82) dazu angepaßt ist, infolge eines Fördervolumenstroms der Hydraulikpumpe (72) das Umschaltventil (10) von seiner Grundstellung in seine Betätigungsstellung zu schalten und unabhängig von dem mittels des Drosselventils (84) jeweils eingestellten Staudruck in seiner Betätigungsstellung zu halten.

2. Bremsanlage nach Anspruch 1, **dadurch gekennzeichnet, daß** das Umschaltventil (10) als Wechselventil mit einem ungesteuerten Anschluß (94), der hydraulisch mit dem Zuspannorgan (14) verbunden ist, und zwei Steueranschlüssen (96, 98) ausgebildet ist, von denen der eine Steueranschluß (96) mit dem Geberzylinder (12) und der andere Steueranschluß (98) mit dem Servokreis (16) hydraulisch verbunden ist.

3. Bremsanlage nach Anspruch 2, **dadurch gekennzeichnet, daß** jedem Steueranschluß (96, 98) ein Ventilsitz (100, 102) für einen Ventilkörper (104) des Umschaltventils (10) zugeordnet ist, der mittels einer Ventilfeder (106) gegen den Ventilsitz (102) am Steueranschluß (98) zum Servokreis (16) vorgespannt ist.

4. Bremsanlage nach einem der vorhergehenden Ansprüche, **dadurch gekennzeichnet, daß** der Steuerzylinder (82) für das Umschaltventil (10) einen Steuerkolben (108) aufweist, der zwei Druckräume (110, 112) begrenzt, von denen der eine Druckraum (110) mit der Hydraulikpumpe (72) und der andere Druckraum (112) mit dem Drosselventil (84) hydraulisch verbunden ist.

5. Bremsanlage nach Anspruch 4, **dadurch gekennzeichnet, daß** die Druckräume (110, 112) des Steuerzylinders (82) über eine Festdrossel (114) im Steuerkolben (108) oder ein in Richtung der Hydraulikpumpe (72) sperrendes Rückschlagventil hydraulisch verbunden sind.

6. Bremsanlage nach Anspruch 4 oder 5, **dadurch gekennzeichnet, daß** der Steuerkolben (108) mittels eines Stößels (116), der im mit dem Drosselventil (84) verbundenen Druckraum (112) angeordnet ist, über den Steueranschluß (98) zum Servokreis (16) mit dem Ventilkörper (104) des Umschaltventils (10) wirkverbunden ist, um bei Betrieb der Hydraulikpumpe (72) den Ventilkörper (104) gegen den Ventilsitz (100) am Steueranschluß (96) zum Geberzylinder (12) zu drücken.

7. Bremsanlage nach Anspruch 6, **dadurch gekennzeichnet, daß** der Außendurchmesser des Stößels (116) kleiner ist als der Innendurchmesser des Ventilsitzes (102) am Steueranschluß (98) zum Servokreis (16), so daß der Stößel (116) im Fremdkraft-Bremsbetrieb den Ventilsitz (102) am Steueranschluß (98) zum Servokreis (16) durchgreifen kann ohne die hydraulische Verbindung zwischen dem Servokreis (16) und dem Zuspannorgan (14) zu unterbrechen.

8. Bremsanlage nach einem der Ansprüche 4 bis 7, **dadurch gekennzeichnet, daß** die dem mit der Hydraulikpumpe (72) verbundenen Druckraum (110) zugewandte hydraulische Wirkfläche des Steuerkolbens (108) um ein Mehrfaches größer ist als die dem Steueranschluß (96) zum Geberzylinder (12) zugewandte hydraulische Wirkfläche des Ventilkörpers (104).

9. Bremsanlage nach einem der vorhergehenden Ansprüche, **dadurch gekennzeichnet, daß** der Druck im Servokreis (16) in Abhängigkeit von Signalen eines Drucksensors (62, 64), der in eine Druckleitung (56, 60) zwischen dem Geberzylinder (12) und dem Umschaltventil (10) geschaltet ist, und einer Weg- oder Kraftmeßeinrichtung (30) am Geberzylinder (12) einstellbar ist.

10. Bremsanlage nach Anspruch 9, **dadurch gekennzeichnet, daß** das Drosselventil (84) in Abhängigkeit von den Signalen des Drucksensors (62, 64) und der Weg- oder Kraftmeßeinrichtung (30) elektromagnetisch ansteuerbar ist.

## Claims

1. Hydraulic power brake system, particularly for motor vehicles, having a reversing valve (10), which in its normal position hydraulically connects a manually operable pick-up cylinder to a clamping member (14), so that a brake pressure can be applied if the power on the clamping member (14) fails and which in its operating position, where it is located in normal brake operation, it operatively connects the clamping member (14) for the application of a brake pressure to a servo-circuit (16) electrically controllable as a function of the operation of the pick-up cylinder (12) and which has a hydraulic pump (72) and a throttle valve (84) through which there is a forced flow of hydraulic fluid in power brake operation and whose throttle cross-section is adjustable for producing a clearly defined dynamic pressure, which can be applied by means of the reversing valve (10) to the clamping member (14), **characterized in that** the hydraulic pump (72), a control cylinder (82) for the reversing valve (10) and a throttle valve (84) are successively arranged in this order in the flow direction of the hydraulic fluid in the servo-circuit (16), the control cylinder (82) being adapted in such a way to switch the reversing valve (10) from its normal position into its operating position as a result of a volumetric delivery flow of the hydraulic pump (72) and maintain it in its operating position independently of the dynamic pressure set by means of the throttle valve (84).

2. Brake system according to claim 1, **characterized in that** the reversing valve (10) is constructed as a changeover valve with an uncontrolled connection (94), which is hydraulically connected to the clamping member (14), and two control connections (96, 98), whereof one control connection (96) is hydraulically connected to the pick-up cylinder (12) and the other control connection (98) is hydraulically connected to the servo-circuit (16).

3. Brake system according to claim 2, **characterized in that** with each control connection (96, 98) is associated a valve seat (100, 102) for a valve body (104) of the reversing valve (10) and which is biased by means of a valve spring (106) against the valve seat (102) on the control connection (98) to the servo-circuit (16).

4. Brake system according to one of the preceding claims, **characterized in that** the control cylinder (82) for the reversing valve (10) has a control piston (108) defining two pressure chambers (110, 112), whereof one pressure chamber (110) is hydraulically connected to the hydraulic pump (72) and the other pressure chamber (112) is hydraulically connected to the throttle valve (84).

5. Brake system according to claim 4, **characterized in that** the pressure chambers (110, 112) of the control cylinder (82) are hydraulically connected by means of a fixed throttle (114) in the control piston (108) or a check valve blocking in the direction of the hydraulic pump (72).

6. Brake system according to claim 4 or 5, **characterized in that** the control piston (108) is operatively connected by means of a tappet (116) located in the pressure chamber (112) connected to the throttle valve (84), by means of the control connection (98) to the servo-circuit (16) with the valve body (104) of the reversing valve (10), so that during the operation of the hydraulic pump (72) it presses the valve body (104) against the valve seat (100) on the control connection (96) to the pick-up cylinder (12).

7. Brake system according to claim 6, **characterized in that** the external diameter of the tappet (116) is smaller than the internal diameter of the valve seat (102) on the control connection (98) to the servo-circuit (16), so that the tappet (116) during power brake operation can pass through the valve seat (102) on the control connection (98) to the servo-circuit (16) without interrupting the hydraulic connection between the servo-circuit (16) and the clamping member (14).

8. Brake system according to one of the claims 4 to 7, **characterized in that** the hydraulic working surface of the control piston (108) facing the pressure chamber (110) connected to the hydraulic pump (72) is a multiple larger than the hydraulic working surface of the valve body (104) facing the control connection (96) to the pick-up cylinder (12).

9. Brake system according to one of the preceding claims, **characterized in that** the pressure in the servo-circuit (16) is adjustable as a function of signals of a pressure sensor (62, 64), which is connected in the pressure line (56, 60) between the pick-up cylinder (12) and the reversing valve (10) and a path or power measuring device (30) on the pick-up cylinder (12).

10. Brake system according to claim 9, **characterized in that** the throttle valve (84) is electromagnetically controllable as a function of the signals of the pressure sensor (62, 64) and the path or power measuring device (30).

## Revendications

1. Système de freinage hydraulique actionné par une force extérieure, en particulier pour véhicules automobiles, comportant une soupape d'inversion (10)
qui, dans sa position de base, relie hydrauliquement un maître-cylindre à actionnement manuel (12) et un organe d'application de frein (14), de sorte qu'en cas de défaillance de la force extérieure, une force de freinage peut être appliquée sur l'organe d'application de frein (14),
et qui, dans sa position d'actionnement, dans laquelle elle se trouve lors d'un fonctionnement de frein normal, établit une relation fonctionnelle entre l'organe d'application de frein (14) destiné à appliquer une force de freinage, et le circuit d'assistance (16) qui est apte à être commandé électriquement en fonction de l'actionnement du maître-cylindre (12) et qui comporte une pompe hydraulique (72) et une soupape d'étranglement (84) qui est traversée par un courant forcé de liquide hydraulique, en mode de freinage assisté par une force extérieure, et dont la section d'étranglement est réglable pour produire une pression de retenue définie apte à être appliquée à l'organe d'application de frein (14) par l'intermédiaire de la soupape d'inversion (10), **caractérisé en ce que** la pompe hydraulique (72), un cylindre de commande (82) pour la soupape d'inversion (10) et la soupape d'étranglement (84) sont disposés les uns derrière les autres, dans cet ordre, dans le sens d'écoulement du liquide hydraulique dans le circuit d'assistance (16), le cylindre de commande (82) étant adapté pour faire passer la soupape d'inversion (10) de sa position de base à sa position d'actionnement en raison d'un courant de volume déplacé de la pompe hydraulique (72) et pour la maintenir dans sa position d'actionnement quelle que soit la pression de retenue réglée à l'aide de la soupape d'étranglement (84).

2. Système de freinage selon la revendication 1, **caractérisé en ce que** la soupape d'inversion (10) est conçue comme une soupape à deux voies avec un raccordement non commandé (94) qui est relié hydrauliquement à l'organe d'application de frein (14), et deux raccordements de commande (96, 98), l'un (96) étant relié hydrauliquement au maître-cylindre (12) et l'autre (98) au circuit d'assistance (16).

3. Système de freinage selon la revendication 2, **caractérisé en ce qu'**il est prévu, associé à chaque raccordement de commande (96, 98), un siège de soupape (100, 102) pour un corps (104) de la soupape d'inversion (10) qui est contraint à l'aide d'un ressort de soupape (106) contre le siège de soupape (102) au niveau du raccordement de commande (98) avec le circuit d'assistance (16).

4. Système de freinage selon l'une des revendications précédentes, **caractérisé en ce que** le cylindre de commande (82) pour la soupape d'inversion (10) comporte un piston de commande (108) qui délimite deux chambres de pression (110, 112), l'une (110) étant reliée hydrauliquement à la pompe hydraulique (72) et l'autre (112) à la soupape d'étranglement (84).

5. Système de freinage selon la revendication 4, **caractérisé en ce que** les chambres de pression (110, 112) du cylindre de commande (82) sont reliées hydrauliquement grâce à un élément d'étranglement fixe (114) prévu dans le piston de commande (108), ou à un clapet antiretour qui forme barrage dans le sens de la pompe hydraulique (72).

6. Système de freinage selon la revendication 4 ou 5, **caractérisé en ce que** le piston de commande (108) est en relation fonctionnelle avec le corps (104) de la soupape d'inversion (10) grâce à un poussoir (116) qui est disposé dans la chambre de pression (112) reliée à la soupape d'étranglement (84), et par l'intermédiaire du raccordement de commande (98) avec le circuit d'assistance (16), afin de pousser, pendant le fonctionnement de la pompe hydraulique (72), le corps de soupape (104) contre le siège de soupape (100) au niveau du raccordement de commande (96) avec le maître-cylindre (12).

7. Système de freinage selon la revendication 6, **caractérisé en ce que** le diamètre extérieur du poussoir (116) est inférieur au diamètre intérieur du siège de soupape (102) prévu au niveau du raccordement de commande (98) avec le circuit d'assistance (16), de sorte que le poussoir (116), en mode de freinage avec une force extérieure, peut traverser le siège de soupape (102) prévu au niveau du raccordement de commande (98) avec le circuit d'assistance (16), sans interrompre la liaison hydraulique entre le circuit d'assistance (16) et l'organe d'application de frein (14).

8. Système de freinage selon l'une des revendications 4 à 7, **caractérisé en ce que** la surface active hydraulique du piston de commande (108) qui est tournée vers la chambre de pression (110) reliée à la pompe hydraulique (72) est plusieurs fois supérieure à la surface active hydraulique du corps de soupape (104) qui est tournée vers le raccordement de commande (96) avec le maître-cylindre (12).

9. Système de freinage selon l'une des revendications précédentes, **caractérisé en ce que** la pression dans le circuit d'assistance (16) est réglable en fonction de signaux d'un capteur de pression (62, 64) qui est monté dans une conduite de pression (56, 60) entre le maître-cylindre (12) et la soupape d'inversion (10), et d'un dispositif de mesure de déplacement ou de force (30) prévu sur le maître-cylindre (12).

10. Système de freinage selon la revendication 9, **caractérisé en ce que** la soupape d'étranglement (84) est apte à être commandée par voie électromagnétique en fonction des signaux du capteur de pression (62, 64) et du dispositif de mesure de déplacement ou de force (30).
